# EUROPEAN PATENT SPECIFICATION

(11) **EP 3 385 587 B1**
(45) Date of publication and mention of the grant of the patent: **02.08.2023**
(21) Application number: 16870215.7
(22) Date of filing: 26.05.2016
(51) Int. Cl.: B60H 1/00, B60H 1/32, F16L 5/02, F16L 5/10, F24F 1/02

(54) **ELASTIC BODY FOR CLOSURE, AIR CONDITIONING DEVICE, AND CLOSURE METHOD**
ELASTISCHER KÖRPER FÜR VERSCHLUSS, KLIMATISIERUNGSVORRICHTUNG UND VERSCHLUSSVERFAHREN
CORPS ÉLASTIQUE POUR FERMETURE, DISPOSITIF DE CLIMATISATION ET PROCÉDÉ DE FERMETURE

(30) Priority: 03.12.2015 JP 2015236397
(43) Date of publication of application: 10.10.2018
(73) Proprietor: Mitsubishi Electric Corporation, Chiyoda-ku Tokyo 100-8310 (JP)
(72) Inventor: HASHIZUME Kenichi, Tokyo 100-8310 (JP); ISHIZUKA Tomohiko, Tokyo 100-8310 (JP)
(74) Representative: Studio Torta S.p.A.
(86) International application number: PCT/JP2016/065623
(87) International publication number: WO 2017/094274

(56) References cited:
- EP-A1- 1 193 435
- JP-A- H05 147 432
- JP-A- H05 147 432
- JP-A- H08 129 918
- JP-A- H08 129 918
- JP-A- H09 120 728
- JP-A- 2001 231 135
- JP-A- 2014 057 449
- US-A- 5 701 634

## Description

### Technical Field

The present invention relates to an elastic body for closure, an air conditioning device and a closure method.

### Background Art

An air conditioning device that air-conditions inside a room includes a casing and a refrigeration cycle device housed in the casing. The refrigeration cycle device includes a compressor, a condenser, an evaporator, an expander, a gas-liquid separator and refrigeration piping for connecting these devices.

To increase a thermal efficiency of the refrigeration cycle device, the inside of the casing is partitioned into a plurality of accommodation chambers by a partition plate. Among the components of the refrigeration cycle device, some of the components including the condenser are disposed in one accommodation chamber. The remaining components including the evaporator are disposed in another accommodation chamber.

The refrigeration piping penetrates the partition plate and is routed from one accommodation chamber to another accommodation chamber. When inflow of rainwater is allowed for one accommodation chamber and prevention of inflow of rainwater is required for another accommodation chamber, water-tightness is required for a portion of the partition plate penetrated by the refrigeration piping (hereinafter, referred to as a piping penetration portion).

Patent Literature 1 discloses a technique that uses a rubber body for closure to close a piping penetration portion in an air conditioning device in a watertight manner in order to meet such requirements.

### Citation List

### Patent Literature

Patent Literature 1: Unexamined Japanese Patent Application Kokai Publication No. H05-147432
Patent literature 2: JP H08 129918;
Patent literature 3: US 5 701 634;
Patent literature 4: EP 1 193 435;
Patent literature 5: JP H09 120728; and
Patent literature 6: JP H05 147432.

### Summary of Invention

### Technical Problem

The technique of Patent Literature 1 requires a process in which a support member supporting the rubber body for closure mentioned above is welded to a partition plate beforehand to attach the rubber body for closure to a piping penetration portion.

In addition, the rubber body for closure of Patent Literature 1 does not have a structure that allows misalignment between the center axis of the refrigeration piping and that of the through-hole formed in the partition plate. Therefore, when the two axes are misaligned, a process for correcting the misalignment is essential prior to the attachment of the rubber body for closure.

Therefore, the technique of Patent Literature 1 requires time and efforts for the attachment of the rubber body for closure. This hinders efficient manufacturing of an air conditioning device.

An objective of the present invention is to provide an elastic body for closure that can be easily installed and a closure method using the same. Another objective of the present invention is to provide an air conditioning device comprising said elastic body for closure, that can be efficiently manufactured.

### Solution to Problem

In order to achieve the above-mentioned objectives there are provided an elastic body for closure as claimed in claim 1, an air conditioning device as claimed in claim 6 and a closure method as claimed in claim 8.

### Advantageous Effects of Invention

According to the elastic body for closure of the present invention, as the fitting portion fits against the peripheral edge portion of the through-hole, use of a support member for supporting the elastic body for closure is not required. In addition, the displacement allowance portion allows the relative displacement between the pressurized insertion receiving portion and the fitting portion. Thus, even when the center axis of the shaft and the center axis of the through-hole are misaligned, a process for correcting the misalignment can be omitted. Therefore, the elastic body for closure of the present invention can be easily attached.

Use of the elastic body for closure that can be easily attached enables efficient manufacturing of an air conditioning device comprising said elastic body for closure.

### Brief Description of Drawings

FIG. 1 is a cross-sectional perspective view illustrating a mode of use of an elastic body for closure according to an embodiment;
FIG. 2 is a perspective view illustrating the mode of use of the elastic body for closure according to the embodiment;
FIG. 3 is a perspective view of the elastic body for closure according to the embodiment;
FIG. 4 is a cross section illustrating the mode of use of the elastic body for closure according to the embodiment;
FIG. 5 is an enlarged cross section around a fitting portion of the elastic body for closure according to the embodiment;
FIG. 6 is an enlarged cross section around a fitting portion of an elastic body for closure according to another embodiment;
FIG. 7 is an enlarged cross section of a pressurized insertion receiving portion of the elastic body for closure according to the embodiment;
FIG. 8 is a perspective view illustrating another mode of use of the elastic body for closure according to the embodiment;
FIG. 9 is a cross section illustrating another mode of use of the elastic body for closure according to the embodiment;
FIG. 10 is a perspective view illustrating yet another mode of use of the elastic body for closure according to the embodiment;
FIG. 11 is a cross section illustrating yet another mode of use of the elastic body for closure according to the embodiment;
FIG. 12 is a perspective view illustrating yet another mode of use of the elastic body for closure according to the embodiment;
FIG. 13 is a cross section illustrating yet another mode of use of the elastic body for closure according to the embodiment; and
FIG. 14 is a partial sectional plan view of an air conditioning device for a vehicle according to the embodiment.

### Description of Embodiments

Hereinafter, with reference to the drawings, an air conditioning device for a vehicle and an elastic body for closure according to one embodiment are described. In the drawings, components that are the same or equivalent are assigned the same reference signs.

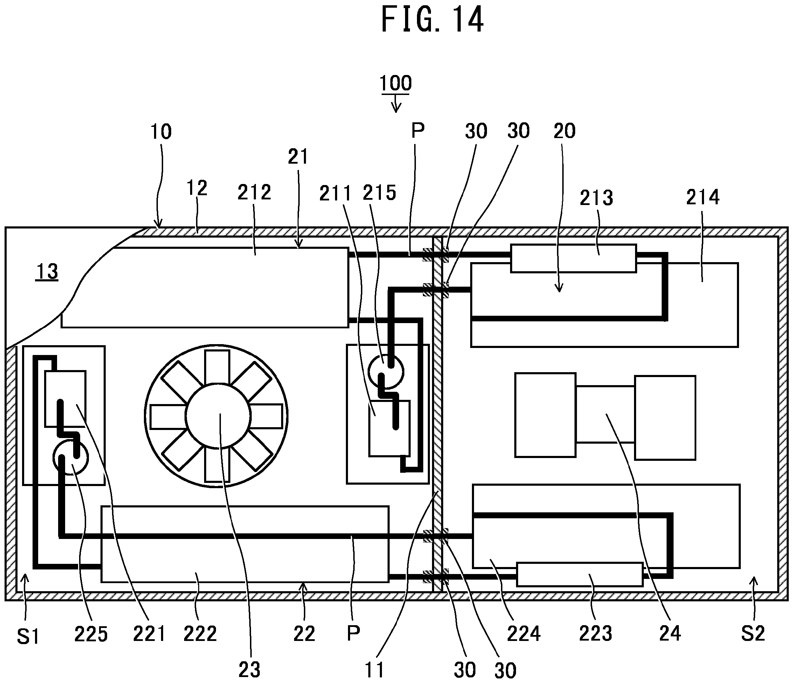

As illustrated in FIG. 14, an air conditioning device for a vehicle 100 according to the present embodiment includes a housing 10 defining spaces therein, a partition plate 11 functioning as a plate-like body that partitions the inside of the housing 10 into two accommodation chambers, an air conditioning device 20 including refrigeration piping P as a shaft penetrating the partition plate 11, and a rubber body 30 for closure as an elastic body for closure that closes a portion of the partition plate 11 penetrated therethrough by the refrigeration piping P. In addition, to clarify a structure of the refrigeration piping P, FIG. 14 illustrates the colored refrigeration piping P.

The housing 10 is installed on the roof of the railroad vehicle, and includes a box-like base frame 12 whose upper portion is open and is rectangular-shaped and long in the traveling direction of the railway vehicle (lateral direction in FIG. 14), and a cover 13 closing the upper portion of an opening of the base frame 12. In order to facilitate understanding, FIG. 14 illustrates only a portion of the cover 13.

The partition plate 11 partitions an internal space defined by the base frame 12 and the cover 13 into an outdoor unit accommodation chamber S1 and an indoor unit accommodation chamber S2.

In this way, an objective of partitioning the inside of the housing 10 is to thermally isolate a condenser and an evaporator of the refrigeration cycle device included in the air conditioning device 20 by disposing one of the condenser and the evaporator in the outdoor unit accommodation chamber S1 and disposing the other in the indoor unit accommodation chamber S2 to increase a thermal efficiency of the refrigeration cycle device.

The air conditioning device 20 is housed in the housing 10. The air conditioning device 20 includes the two refrigeration cycle devices 21 and 22, an outdoor blower 23, and an indoor blower 24. The two refrigeration cycle devices 21 and 22 include the refrigeration piping P distributing a refrigerant forming two refrigeration cycles. The outdoor blower 23 releases air outside, a temperature of the air being adjusted by one of the condenser and the evaporator of the refrigeration cycle devices 21 and 22. The indoor blower 24 sends air, whose temperature is adjusted by the other of the condenser or the evaporator, to each room.

The one refrigeration cycle device 21 includes a compressor 211, an outdoor heat exchanger 212, an expander 213, an indoor heat exchanger 214 and a gas-liquid separator 215 that are mutually connected by the refrigeration piping P.

The refrigeration cycle device 22 similarly includes a compressor 221, an outdoor heat exchanger 222, an expander 223, an indoor heat exchanger 224 and a gas-liquid separator 225 that are mutually connected by refrigeration piping P different from the refrigeration piping included in the refrigeration cycle device 21.

Among the pair of the outdoor heat exchangers 212 and 222 and the pair of the indoor heat exchangers 214 and 224, one pair may be evaporators and the other pair may be condensors, and vice versa. Each of the expanders 213 and 223 includes an expansion valve or a capillary tube.

The compressors 211 and 221, the outdoor heat exchangers 212 and 222, the gas-liquid separators 215 and 225 and the outdoor blower 23 are disposed in the outdoor unit accommodation chamber S1.

The expanders 213 and 223, the indoor heat exchangers 214 and 224 and the indoor blower 24 are disposed in the indoor unit accommodation chamber S2.

Hereinafter, functions of the air conditioning device 100 for vehicles are described in reference to, for example, a case in which the passenger compartment of a railroad vehicle is cooled. The functions of the two refrigeration cycle devices 21 and 22 are similar. Thus, the functions of one of the refrigeration cycle device 21 are typically described.

The compressor 211 compresses the refrigerant. The compressed refrigerant is sent to the outdoor heat exchanger 212 which is used as a condenser. The outdoor heat exchanger 212 liquefies the refrigerant by releasing heat to the environment. The air heated by the outdoor heat exchanger 212 is then released to the outside by the outdoor blower 23.

The refrigerant liquefied by the outdoor heat exchanger 212 is depressurized in the expander 213, and is sent to the indoor heat exchanger 214 as an evaporator. The indoor heat exchanger 214 vaporizes the refrigerant by absorbing heat from outside. The air cooled by the indoor heat exchanger 214 is then sent into the passenger compartment by the indoor blower 24.

The refrigerant vaporized in the indoor heat exchanger 214 is sent to the gas-liquid separator 215. The gas-liquid separator 215 separates the vaporized refrigerant from the liquid refrigerant not vaporized by the indoor heat exchanger 214 and sends only the gaseous refrigerant to the compressor 211. In the above-mentioned procedure, the refrigerant is cycled.

The air conditioning device 100 for vehicles is particularly characterized in that the rubber body 30 for closure is configured to enable attachment in a small number of steps. Hereinafter, the rubber body 30 for closure is described.

In the air conditioning device 100 for vehicles, the outdoor unit accommodation chamber S1 has a configuration in which rainwater can flow in. As the indoor unit accommodation chamber S2 communicates with the passenger compartment, the inflow of rainwater into the indoor unit accommodation chamber S2 has to be prevented. Therefore, water-tightness is required in each portion of the partition plate 11 penetrated therethrough by the refrigeration piping P.

Specifically, water-tightness is required in portions in which the partition plate 11 is, penetrated by: the refrigeration pipe P connecting the outdoor heat exchanger 212 and the expander 213, the refrigeration pipe P connecting the indoor heat exchanger 214 and the gas-liquid separator 215, the refrigeration pipe P connecting the outdoor heat exchanger 222 and the expander 223, and the refrigeration pipe P connecting the indoor heat exchanger 224 and the gas-liquid separator 225.

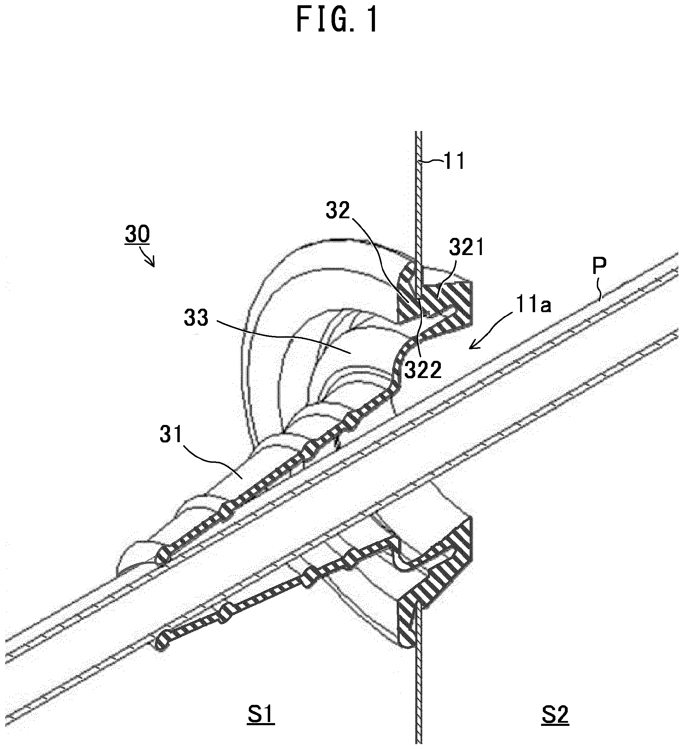

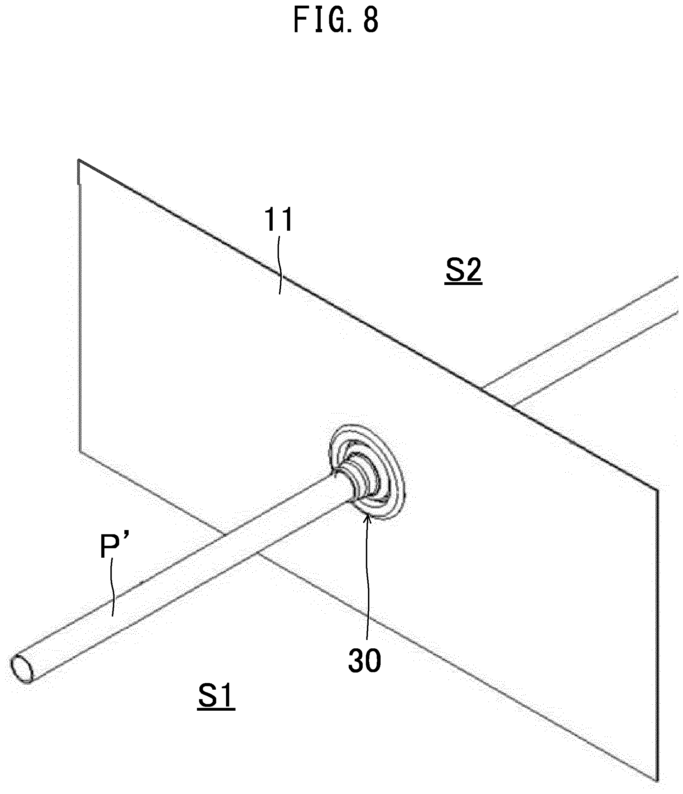

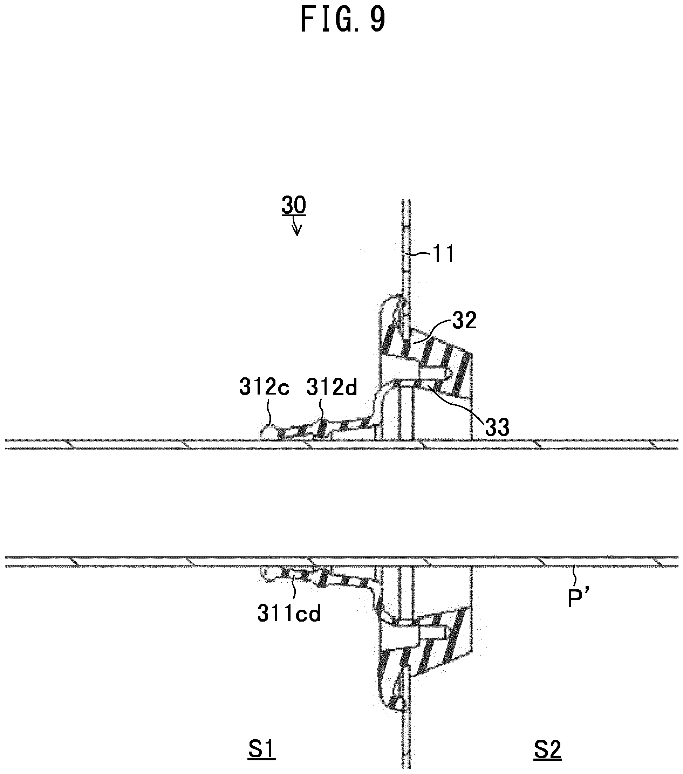

The rubber bodies 30 for closure water-tightly close each portion in which those refrigeration pipes P penetrating the partition plate 11. The configurations of each of the rubber bodies 30 for closure are similar. Therefore, with reference to FIGS. 1 through 13, the structure of one rubber body 30 for closure and the vicinity thereof is representatively described in detail as follows.

As illustrated in FIG. 1, a through-hole 11a is formed in the partition plate 11, and the refrigeration piping P is inserted through the through-hole 11a. The inner diameter of the through-hole 11a is larger than an outer diameter of the refrigeration piping P, and a gap is secured between the partition plate 11 and the refrigeration piping P. The rubber body 30 for closure water-tightly closes the gap.

The rubber body 30 for closure is formed of an elastic material, specifically integrally molded ethylene propylene diethylene rubber (EPDM). The whole material is elastic. In addition, other synthetic or natural rubber, and other resin can be used as the elastic material.

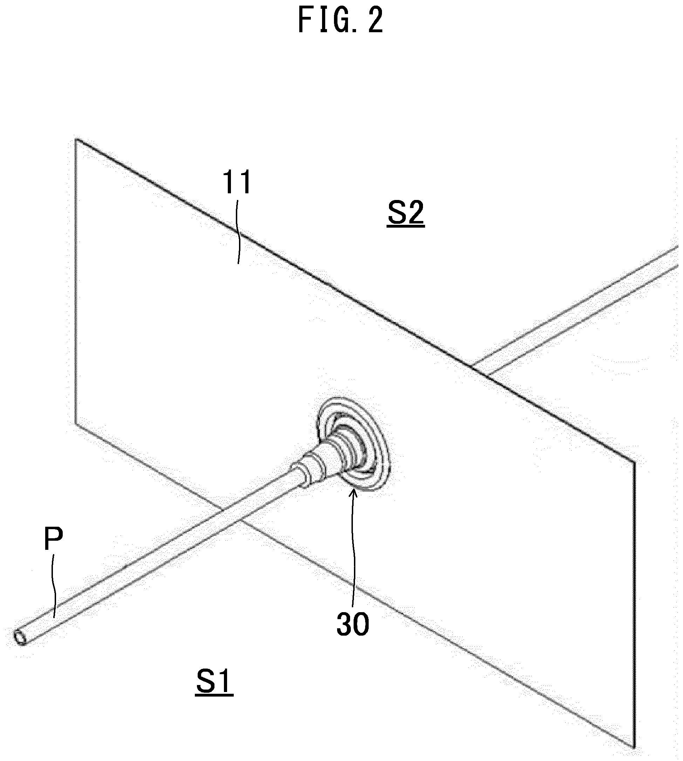

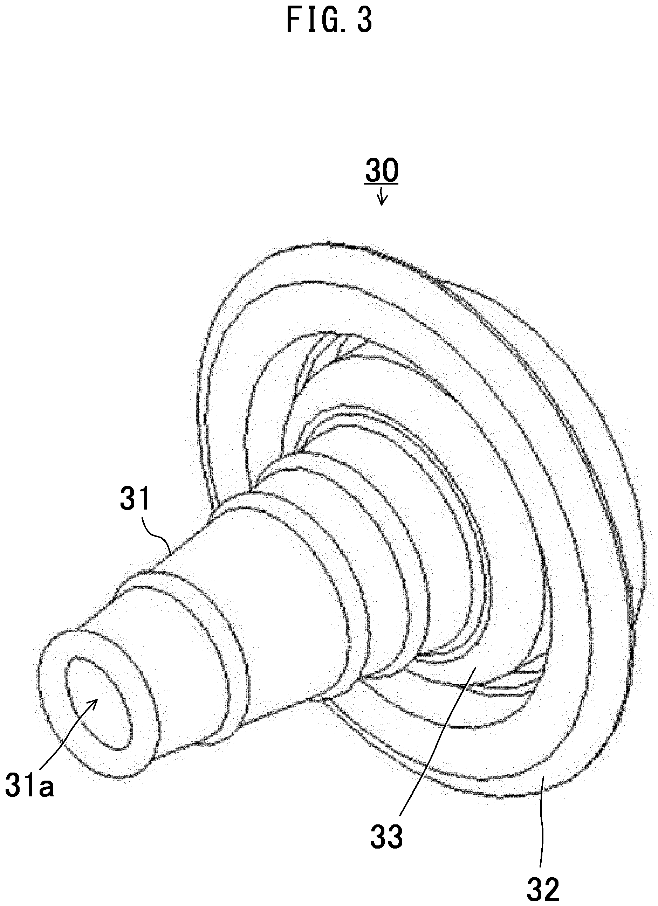

As illustrated in FIG. 2, the rubber body 30 for closure is used in a state in which the refrigeration piping P is pressed and inserted in the rubber body 30 for closure and the rubber body 30 for closure is fitted in the partition plate 11. Specifically, as illustrated in FIG. 3, the rubber body 30 for closure includes a pressurized insertion receiving portion 31, a fitting portion 32, and a displacement allowance portion 33. An opening 31a in which the refrigeration piping P is pressed and inserted is formed in the pressurized insertion receiving portion 31. The fitting portion 32 fits to a peripheral edge portion ofthe through-hole 11a in the partition plate 11. The displacement allowance portion 33 connects the pressurized insertion receiving portion 31 and the fitting portion 32.

As illustrated in FIG. 1, the fitting portion 32 includes an external cylinder portion 321 that fits in the through-hole 11a. The external cylinder portion 321 forms a cylinder having a height in an insertion direction along the through-hole 11a of the refrigeration piping P (hereinafter, referred to as the piping insertion direction). The refrigeration piping P pressed and inserted in the pressurized insertion receiving portion 31 penetrates the partition plate 11 by passing through the inside of the external cylinder portion 321. Here, being pressed and inserted means to be inserted while pressing and expanding open the opening 31a of the pressurized insertion receiving portion 31.

A groove 322 whose cross section is concave is formed over the entire periphery of the through-hole 11a at a position ofthe outer peripheral surface of the external cylinder portion 321 facing an inner circumferential surface ofthe through-hole 11a. The groove 322 and the peripheral edge portion of the through-hole 11a in the partition plate 11 are fitted together over the entire periphery.

In a free state ofthe external cylinder portion 321 in which no stress is applied to the external cylinder portion 321, the outer diameter ofthe external cylinder portion 321 is slightly larger than the inner diameter ofthe through-hole 11a. The external cylinder portion 321 is fitted in the through-hole 11a in a state of compression inward in the radial direction.

For this reason, a bottom surface ofthe groove 322 elastically presses an inner circumferential surface of the through-hole 11a by elastic repulsive force of the external cylinder portion 321. The external cylinder portion 321 is the part most thickly formed among the parts of the rubber body 30 for closure, and applies elastic repulsive force sufficient to secure water-tightness between the bottom surface of the groove 322 and the inner circumferential surface of the through-hole 11a. In this way, water-tightness is secured in a fitted portion between the fitting portion 32 and the partition plate 11.

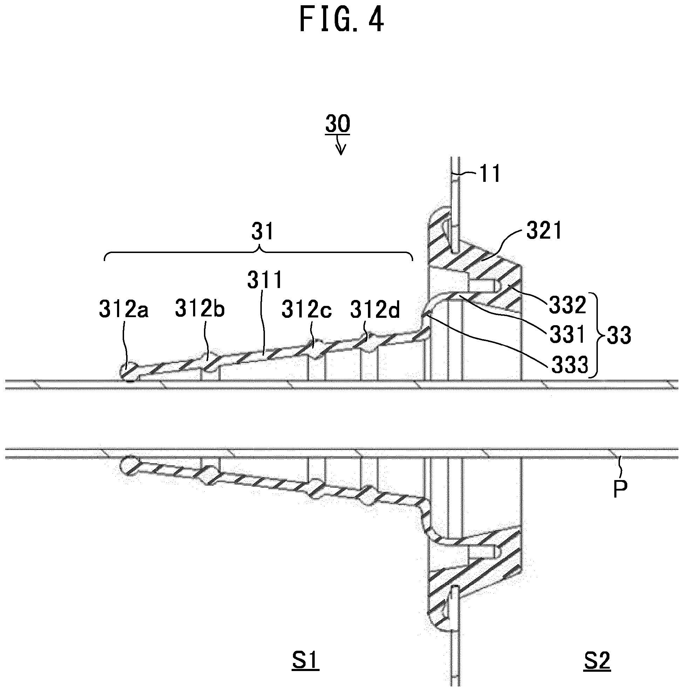

As illustrated in FIG. 4, the displacement allowance portion 33 includes an inner cylinder portion 331, a base 332 and a curved portion 333.

The inner cylinder portion 331 is disposed inward in the radial direction of the external cylinder portion 321 and forms a cylinder having a height in the above-mentioned piping insertion direction (in the horizontal direction in FIG. 4).

The base 332 is disposed in an end portion (right end in FIG. 4) of the rubber body 30 for closure in the above-mentioned piping insertion direction. Specifically, the base 332 is disposed in the indoor unit accommodation chamber S2. The base 332 connects the inner cylinder portion 331 and the external cylinder portion 321. Entry of rainwater from the base 332 and into the space between the pressurized insertion receiving portion 31 and the refrigeration piping P can be prevented, by use of the rubber body 30 for closure facing both of the outdoor unit accommodation chamber S1 into which rainwater can flow and the indoor unit accommodation chamber S2 in which an inflow of rainwater is to be prevented, such that this base 332 is disposed toward the indoor accommodation chamber S2 side.

The curved portion 333 is connected to an end of the inner cylinder portion 331 on the opposite side of the base 332 (left end in FIG. 4) with respect to a piping insertion direction, and has a shape that is curved to approach the refrigeration piping P.

The thickness of the inner cylinder portion 331 reduces as the inner cylinder portion 331 goes away from the base 332. The thickness of the curved portion 333 is equal to the thickness of the connection portion of the inner cylinder portion 331 with the curved portion 333. In this way, the thicknesses of the inner cylinder portion 331 and the curved portion 333 are formed smaller than that of the base 332, and easy and elastic displacement is enabled in a direction parallel to the partition plate 11 with respect to the base 332.

The pressurized insertion receiving portion 31 is disposed in the outdoor unit accommodation chamber S1. The pressurized insertion receiving portion 31 includes a tapered tubular portion 311 and a plurality of ring portions 312a through 312d formed along the tapered tubular portion 311.

The tapered tubular portion 311 forms a tube extending in the piping insertion direction, an end thereof is connected to the curved portion 333 in the piping insertion direction, and has a shape in the piping insertion direction that is continuously tapered as the tapered tubular portion 311 goes away from the curved portion 333.

Each of the ring portions 312a through 312d is formed by a local annular thickening of the tapered tubular portion over the entire periphery on the side thereof. The ring portions 312a through 312d are discretely distributed in the piping insertion direction. Inner diameters of the ring portions 312a through 312d are different from each other in response to the tapered tubular portion 311 having a tapered shape. In other words, the inner diameter of the ring portion 312d closest to the curved portion 333 is the largest, and the inner diameter of the ring portion 312a most distant from the curved portion 333 is the smallest.

The ring portion 312a most distant from the curved portion 333 is disposed in the piping insertion direction end of the tapered tubular portion 311. The refrigeration piping P is pressed and inserted in the ring portion 312a.

In a natural state of the ring portion 312a free of applied stress, the inner diameter of the ring portion 312a is slightly smaller than the outer diameter of the refrigeration piping P. The refrigeration piping P is pressed and inserted in a state in which the ring portion 312a is outwardly extended in the radial direction of the ring portion 312a. The ring portion 312a is pressed and contacted against the external surface of the refrigeration piping P. In this way, water-tightness between the pressurized insertion receiving portion 31 and the refrigeration piping P is secured. In the present specification, being pressed and contacted means to closely contact an object in a state of being pressed against the object.

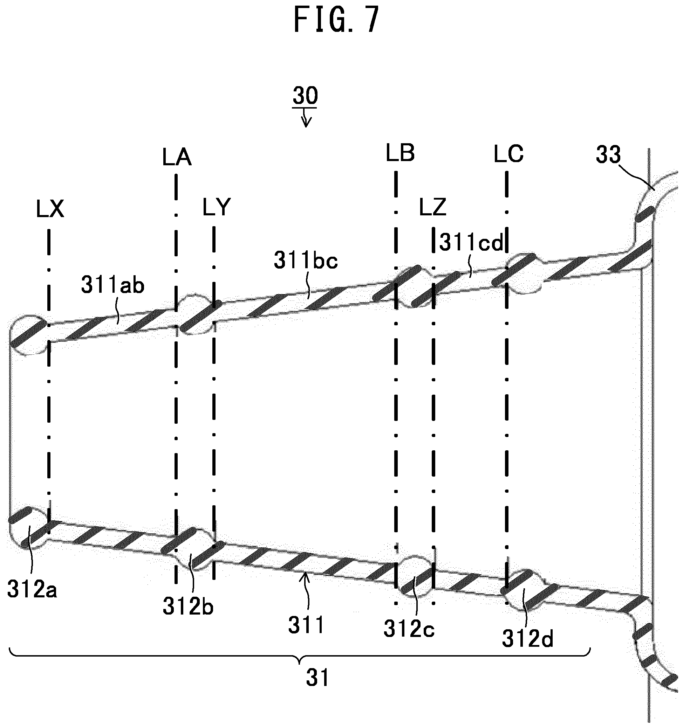

In addition, significance of the other ring portions 312b through 312d is described later using FIG. 7.

As understood from the above-mentioned description, the rubber body 30 for closure can be attached by using two processes, that is, a press-insertion process and a fitting process. In the press-insertion process, the pressurized insertion receiving portion 31 is elastically and liquid-tightly pressed and contacted against the external surface of the refrigeration piping P by pressing and inserting the refrigeration piping P in the opening 31a. In the fitting process, the fitting portion 32 is pushed in the through-hole 11a, and is water-tightly fitted into the peripheral edge portion of the through-hole 11a in a state in which the fitting portion 32 elastically presses the inner circumferential surface of the through-hole 11a. The order of performing the press-insertion process and the fitting process is freely selected. Any one of the processes may be performed first.

Because the fitting portion 32 fits in the peripheral edge portion of the through-hole 11a, a conventionally necessary support member is not required to be used for the fitting portion 32. Thus, a process of welding the support member to the partition plate 11 can be omitted. In addition, no threaded fasteners such as a bolt and crew are required to be used, and the labor of turning threaded fasteners is not required. In addition, the rubber body 30 for closure itself directly and water-tightly engages with the refrigeration piping P and the partition plate 11. Thus, no sealing material is required separately, and the labor of applying or laying the sealing material is not required.

In addition, formed thicknesses of the inner cylinder portion 331 and the curved portion 333 of the displacement allowance portion 33 are relatively small, and easy and elastic deformation is enabled. Thus, a relative displacement between the pressurized insertion receiving portion 31 and the fitting portion 32 in the direction parallel to the partition plate 11 is allowed by the displacement allowance portion 33. Therefore, when the center axis of the refrigeration piping P and the center axis of the through-hole 11a are misaligned, specifically when the two axes are skewed, or the two axes are parallel but there is a gap between the two axes, labor for correcting the misalignment can be omitted.

As a result, the rubber body 30 for closure can be easily attached. In this way, efficient manufacturing of the air conditioning device 100 for vehicles illustrated in FIG. 14 can be achieved by using the rubber body 30 for closure that can be easily attached.

In addition, the rubber body 30 for closure is integrally molded to form a single-unit component. Thus, problems of a closing member including combinations of a plurality of parts, that is, problems of occurrence of troubles due to defective parts having shape variation and/or problems of the time required for preparing a plurality of parts, can be avoided.

In addition, the following effects can be achieved by forming the inner cylinder portion 331 and the curved portion 333 relatively thinly to form a configuration in which the inner cylinder portion 331 and the curved portion 333 are elastically deformed preferentially.

In other words, when the center axis of the refrigeration piping P and the center axis of the through-hole 11a is misaligned, the inner cylinder portion 331 and the curved portion 333 are elastically deformed preferentially, enabling suppression of loads, due to the misalignment of the center axes, on the fitting portion 32 and the pressurized insertion receiving portion 31. The fitting portion 32 and the pressurized insertion receiving portion 31 are responsible for securing of water-tightness. Therefore, loss of water-tightness can be suppressed by suppressing the load that causes a distortion of the fitting portion 32 and the pressurized insertion receiving portion 31.

In addition, in the air conditioning device 100 for vehicles, even after the attachment of the rubber body 30 for closure, a case may occur in which a stress, due to vibration and inertial force generated during travel of the vehicle that increases the misalignment between the center axis of the refrigeration piping P and the center axis of the through-hole 11a, acts on the rubber body 30 for closure. Even, in that case, the displacement allowance portion 33 elastically deforms preferentially, and a fitting state of the fitting portion 32 and the partition plate 11 and a pressing and contacting state of the ring portion 312a to the refrigeration piping P are maintained. Therefore, the loss of the water-tightness between the refrigeration piping P and the partition plate 11 can be suppressed.

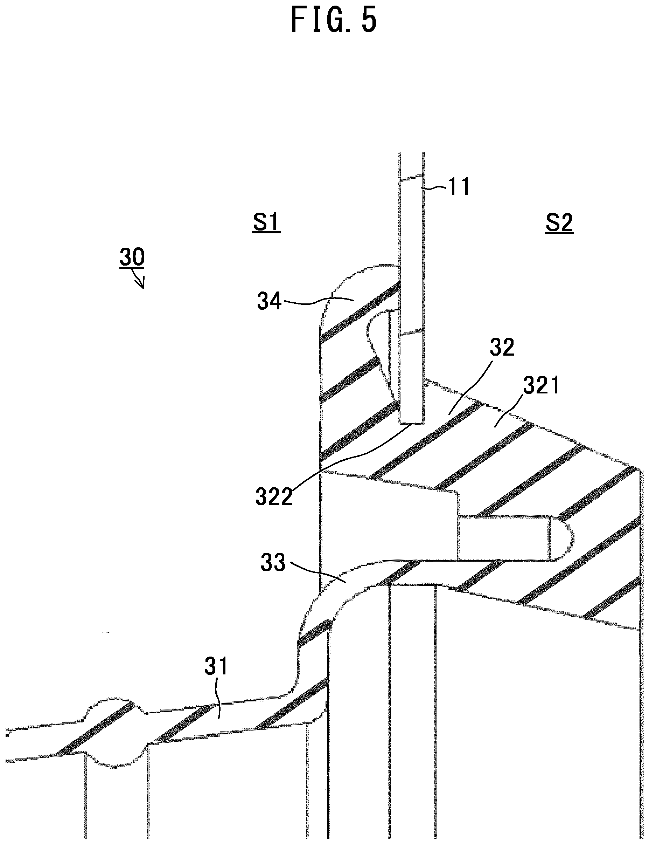

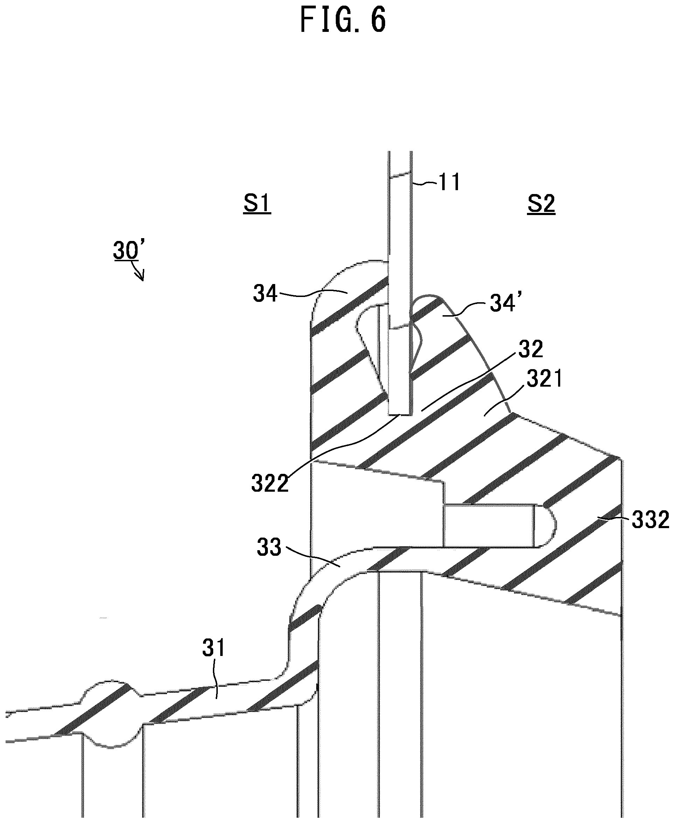

With reference to FIGS. 5 and 6, the detailed configuration of the rubber body 30 for closure is further described as follows.

As illustrated in FIG. 5, the rubber body 30 for closure further includes a lip portion 34 that extends in the outward radial direction of the through-hole 11a from an end of the external cylinder portion 321 of the fitting portion 32 on the pressurized insertion receiving portion 31 side with respect to the piping insertion direction, and that elastically contacts the partition plate 11.

The lip portion 34 elastically contacts a surface of the partition plate 11 on the pressurized insertion receiving portion 31 side to surround the through-hole 11a over the entire periphery. In this way, penetration of rainwater, moisture, and the like to the fitting portion 32 can be suppressed. Thus, the water-tightness between the partition plate 11 and the fitting portion 32 can be improved. In addition, the rubber body 30 for closure can stably set and slip can be prevented.

As illustrated in FIG. 6, a lip portion 34' may further be installed that pinches the partition plate 11 together with the lip portion 34 from both sides in the piping insertion direction. The lip portion 34' extends in the outward radial direction of the through-hole 11a from a position of the external cylinder portion 321 on the base 332 side rather than the partition plate 11 side with respect to the piping insertion direction, and elastically contacts the surface of the partition plate 11 on the base 332 side.

Similar to the lip portion 34, the lip portion 34' also elastically contacts the partition plate 11 over the entire periphery so that the lip portion 34' surrounds the through-hole 11a. In this way, the water-tightness between the fitting portion 32 and the partition plate 11 can be further improved and the rubber body 30 for closure can be set more stably.

With reference to FIGS. 7 through 11, significance of the ring portions other than the ring portion 312a as illustrated in FIG. 4, that is, the ring portions 312b through 312d, is described as follows.

As illustrated in FIG. 7, corresponding to the fact that the inner diameter of the tapered tubular portion 311 increases with approach to the displacement allowance portion 33, inner diameters of the ring portions 312a through 312d increase with approach to the displacement allowance portion 33. For a user to be able to select and use a ring portion of a desired size among the ring portions 312a through 312d, the tapered tubular portion 311 of the rubber body 30 for closure can be used by cutting along a cross section perpendicular to the piping insertion direction. Imaginary lines LA through LC and LX through LZ arranged in the piping insertion direction indicate the above-mentioned cross sections.

FIG. 4 illustrates a state in which the refrigeration piping P is pressed and inserted into the ring portion 312a that is smallest and most distant from the displacement allowance portion 33. In this case, cutting of the tapered tubular portion 311 is not required.

When refrigeration piping thicker than the refrigeration piping P illustrated in FIG. 4 is used, the tapered tubular portion 311 may be used by cutting, for example, at a position of the imaginary line LA of FIG. 7. The imaginary line LA passes through an end of the ring portion 312b on the opposite side of the displacement allowance portion 33 in the piping insertion direction. In this way, refrigeration piping having an outer diameter corresponding to the inner diameter of the ring portion 312b can be used.

When refrigeration piping of further thickness is used, the tapered tubular portion 311 may be similarly used by cutting at a position of the imaginary line LB or LC. The imaginary lines LB and LC pass through ends of the ring portions 312c and 312d, respectively, on the opposite side of the displacement allowance portion 33 in the piping insertion direction.

To correspond to the refrigeration piping P' which is thicker than the refrigeration piping P illustrated in FIG. 4, FIGS. 8 and 9 illustrate a mode of use of the rubber body 30 for closure in which the tapered tubular portion 311 is cut at the position of the imaginary line LB of FIG. 7.

In addition, the tapered tubular portion 311 may be cut at a position of a line segment X in FIG. 7. The imaginary line LX passes an end of the ring portion 312a on the opposite side of the displacement allowance portion 33 in the piping insertion direction. In this case, as the ring portion 312a is cut and separated, the ring portion 312b presses and contacts the refrigeration piping. However, a portion 311 ab of the tapered tubular portion 311 remains, the portion 311ab (hereinafter, referred to as a first middle portion) connecting the ring portion 312a and the ring portion 312b having an increased thickness.

The first intermediate portion 311ab is tubular and extends from the ring portion 312b in the piping insertion direction opposing to the displacement allowance portion 33. The first intermediate portion 311ab can be used as a fastening margin for fastening the refrigeration piping P. The water-tightness between the pressurized insertion receiving portion 31 and the refrigeration piping P can be increased by fastening the fastening margin.

Similarly, when the tapered tubular portion 311 is cut at a position of a line segment Y, a connection portion 311bc connecting the ring portion 312b and the ring portion 312c (hereinafter, referred to as a second middle portion) of the tapered tubular portion 311 can be used as a fastening margin. In addition, when the tapered tubular portion 311 is cut at a position of the imaginary line LZ, a connection portion 311cd of the tapered tubular portion 311 that connects the ring portion 312c having an increased thickness and the ring portion 312d (hereinafter, referred to as a third middle portion) can be used as a fastening margin.

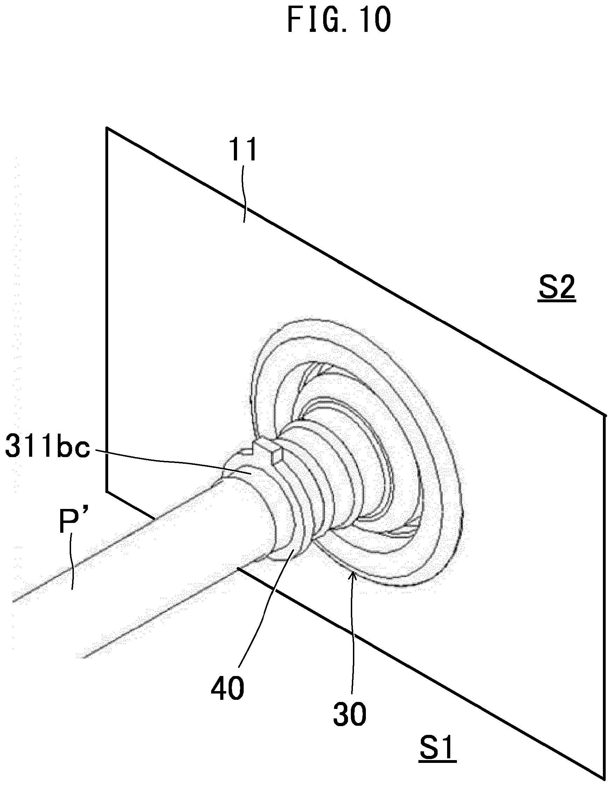

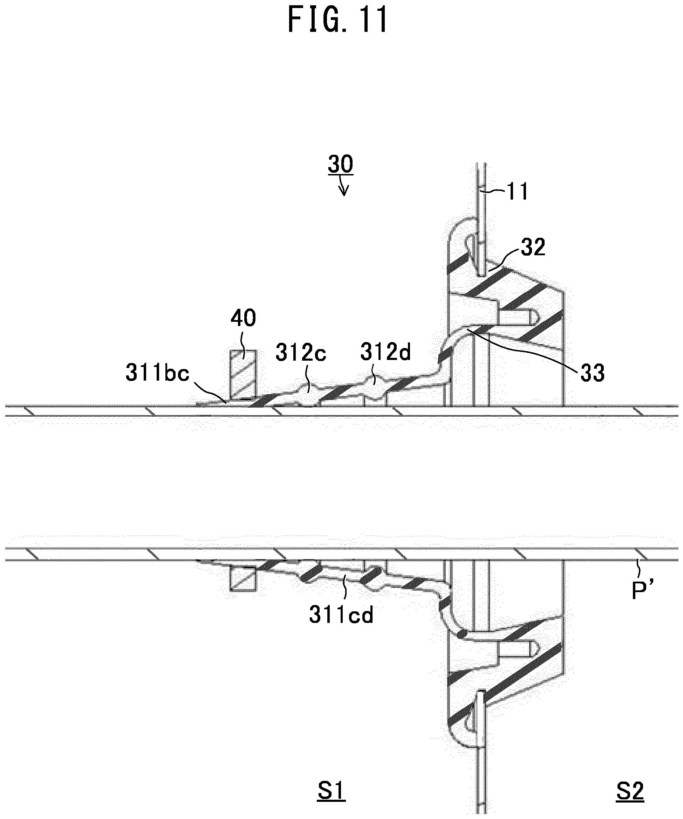

FIGS. 10 and 11 illustrate a mode ofuse ofthe rubber body 30 for closure in which the tapered tubular portion 311 is cut at a position of the imaginary line LY of FIG. 7. The ring portion 312c presses and contacts the refrigeration piping P', and the second intermediate portion 311bc is fastened to the refrigeration piping P' by a fastening tool 40. In this way, water-tightness can be acquired not only between the ring portion 312c and the refrigeration piping P' but also between the second intermediate part between 311bc and the refrigeration piping P' can be acquired. Thus, water-tightness can be acquired between the pressurized insertion receiving portion 31 and the refrigeration piping P'.

A resin cable tie can be used for the fastening tool 40. The fastening tool 40 may be a material that can fasten the fastening margin covering the refrigeration piping, and is not limited to the cable tie in particular.

As mentioned above, the rubber body 30 for closure can be used by cutting the tapered tubular portion 311 as necessary to be able to select a ring portion that corresponds to the outer diameter of the refrigeration piping among a plurality of ring portions 312a through 312d having different inner diameters. For this reason, a single rubber body 30 for closure can be used in common for the refrigeration piping having different outer diameters, and there is no requirement for a process of selection of a member according to the outer diameter of the refrigeration piping. This also contributes to improvement in efficiency of the manufacturing of the air conditioning device 100 for vehicles illustrated in FIG. 14.

One embodiment ofthe present invention is described above. The present invention is not limited to this embodiment, and, for example, following modifications are possible.
(1) In the above mentioned embodiment, the rubber body 30 for closure closes the gap between the refrigeration piping P and the partition plate 11. However, the rubber body 30 for closure also can close a gap between the partition plate 11 and a shaft other than the shaft of the refrigeration piping P. As the shaft other than the shaft of the refrigeration piping P, for example, wiring, a beam, and piping for passage of a fluid other than the refrigerant can be listed.

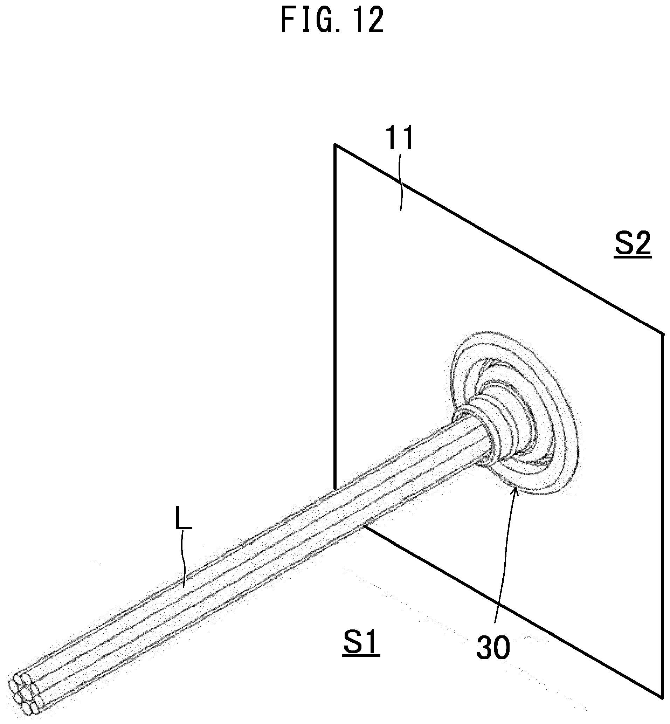

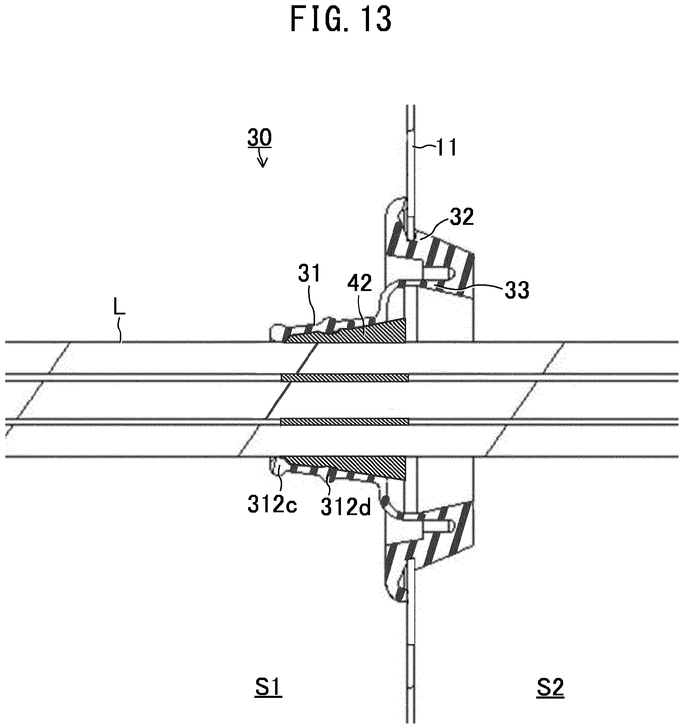

As illustrated in FIGS. 12 and 13, the rubber body 30 for closure can close the gap between the partition plate 11 and a wiring group L formed by bundling up a plurality of wires. In this case, as illustrated in FIG. 13, the water-tightness between the wiring group L and the partition plate 11 can be secured by interposing a filler 42 between the pressurized insertion receiving portion 31 and wiring group L and between the wires forming the wiring group L.

The filler 42 is a cured paste-like sealing material. As the sealing material, for example, a paste-like resin such as a silicone type or a urethane type can be used. The filler 42 is a paste-like material, and thus the filler 42 can be coated on the external peripheral surface of the wiring group L and can press fit between the wires. However, the filler 42 is not particularly limited as long as water-tightness is provided.

(2) The above-mentioned embodiment describes the pressurized insertion receiving portion 31 in a non-disconnected state including the four ring portions 312a - 312d. However, the number of the ring portions included in the pressurized insertion receiving portion 31 is not particularly limited, and the number may be two, three, or five or more. In addition, the pressurized insertion receiving portion 31 may have a configuration in which the pressurized insertion receiving portion 31 includes only a single ring portion when the outer diameters of the refrigeration piping P are made uniform in the air conditioning device 100 for vehicles (refer to FIG. 14).

In addition, the pressurized insertion receiving portion 31 does not necessarily include ring portions 312a - 312d. Even when the pressurized insertion receiving portion 31 includes only the tapered tubular portion 311, the tapered tubular portion 311 tapers with distance from the displacement allowance portion 33. Thus, the tapered tubular portion 311 can be used by cutting off at a position in which the inner diameter of the tapered tubular portion 311 corresponds to the outer diameter of the refrigeration piping.

In addition, the above-mentioned embodiment describes a configuration in which the tapered tubular portion 311 is continually tapered. However, the tapered tubular portion 311 may have a configuration in which the tapered tubular portion 311 is tapered in stages as the tapered tubular portion 311 goes away from the displacement allowance portion 33. Even in this case, the tapered tubular portion 311 can be used by cutting off at a position at which the inner diameter of the tapered tubular portion 311 corresponds to the outer diameter of the refrigeration piping.

(3) In the above-mentioned embodiment, the elastic body 30 for closure is used to achieve water-tightness. The elastic body 30 for closure closely contacts the peripheral edge portion of the through-hole 11a in the partition plate 11 and, as a shaft, the refrigeration piping P. Thus, the elastic body 30 for closure can be liquid-tight not only for water such as rainwater, condensation water and the like, but also liquids such as washing liquid, oil and the like. Therefore, the elastic body 30 for closure may be used to keep liquid-tightness relative to a liquid other than water.

The foregoing describes some example embodiments for explanatory purposes. Accordingly, the specification and drawings are to be regarded in an illustrative rather than a restrictive sense. This detailed description, therefore, is not to be taken in a limiting sense, and the scope of the invention is defined only by the included claims.

### Industrial Applicability

The elastic body for closure of the present invention can be widely used to close a gap between a partition plate in which a through-hole is formed and a shaft inserted in the through-hole. The air conditioning device of the present invention, for example, can be used for air conditioning of a house and a passenger compartment of a railroad vehicle.

### Reference Signs List

10 Housing
11 Partition plate (plate-like body)
11a Through-hole
12 Base frame
13 Cover
20 Air conditioning device
21, 22 Refrigeration cycle device
23 Outdoor blower
24 Indoor blower
30, 30' Rubber body for closure (elastic body for closure)
31 Pressurized insertion receiving portion
31a Opening
32 Fitting portion
33 Displacement allowance portion
34, 34' Lip portion
40 Clamping tool
42 Filler
100 Air conditioning device for cars (air conditioning device)
211, 221 Compressor
212, 222 Outdoor heat exchanger (condenser)
213, 223 Expander
214, 224 Indoor heat exchanger (evaporator)
215, 225 Gas-liquid separator
311 Taper tubular portion
311ab First intermediate portion (fastening margin)
311bc Second intermediate portion (fastening margin)
311cd Third intermediate portion (fastening margin)
312a - 312d Ring portion
321 Outer cylinder portion
322 Groove
331 Inner cylinder portion
332 Base
333 Curved portion
S1 Outdoor unit accommodation chamber (accommodation chamber)
S2 Indoor unit accommodation chamber (accommodation chamber)
P, P' Refrigerant piping (piping, shaft)
L Wiring group

## Claims

1. An elastic body (30) for closure for closing a gap between a plate-like body (11) in which a through-hole (11a) is formed and a shaft (P) that is inserted in the through-hole (11a), the elastic body (30) comprising:
a pressurized insertion receiving portion (31) having formed therein an opening (31a) into which the shaft (P) can be pressed and inserted, such that the pressurized insertion receiving portion (31) elastically presses and contacts liquid-tightly against an external surface of the shaft (P);
a fitting portion (32) configured to fit liquid-tightly a peripheral edge portion of the through-hole (11a) in the plate-like body (11) in a state elastically pressing against an inner circumferential surface of the through-hole (11a); and
a displacement allowance portion (33) configured to close a gap between the pressurized insertion receiving portion (31) and the fitting portion (32), and then to allow a relative displacement of the pressurized insertion receiving portion (31) and the fitting portion (32) in a direction parallel to the plate-like body (11) by elastic deformation,
wherein the fitting portion (32) includes an external cylinder portion (321) for fitting in the through-hole (11a) , said external cylinder portion (321) forming a cylinder with a height in an insertion direction along the through-hole (11a) of the shaft (P) and having an inside through which the shaft (P) can pass to penetrate the plate-like body (11) when pressed and inserted into said opening (31a) ;
wherein a groove (322) whose cross section is concave is formed at a position of an outer peripheral surface of the external cylinder portion (321) for facing an inner circumferential surface of the through-hole (11a), such that the groove (322) and the peripheral edge portion of the through-hole (11a) in the plate-like body (11) can be fitted together over the entire periphery of the through-hole (11a) ;
wherein the external cylinder portion (321) is the most thickly formed part among the parts of the elastic body (30) and is suitable for being fitted in the through-hole (11a) in a state of elastic compression inward in a radial direction of the external cylinder portion (321) so as to secure water-tightness between a bottom surface of the groove (322) and the inner circumferential surface of the through-hole (11a) ;
wherein the displacement allowance portion (33) includes a base (332), and a curved portion (333) ;
**characterized in that** the displacement allowance portion (33) further includes an inner cylinder portion (331) which is disposed inward in the radial direction and forms a further cylinder having a further height in the insertion direction;
wherein the base (332) is disposed in an end portion of the elastic body (30) according to the insertion direction, and connects the inner cylinder portion (331) and the external cylinder portion (321);
wherein the curved portion (333) is connected to an end of the inner cylinder portion (331) on the opposite side of the base (332) with respect to the insertion direction and has a shape that is curved to approach the shaft (P);
wherein the pressurized insertion receiving portion (31) includes a tapered tubular portion (311) forming a tube extending in the insertion direction, having an end connected to the curved portion (333), and has a shape in the insertion direction that is tapering continuously or in a stepwise manner as the tapered tubular portion (311) goes away from the curved portion (333);
the thickness of the inner cylinder portion (331) reduces as the inner cylinder portion (331) goes away from the base (332),
the thickness of the curved portion (333) is equal to the thickness of the connection portion of the inner cylinder portion (331) with the curved portion (333), such that the thicknesses of the inner cylinder portion (331) and the curved portion (333) are formed smaller than that of the base (332) .

2. The elastic body (30) for closure according to claim 1,
**characterized in that** the tapered tubular portion (311) can be used by cutting along a cross section perpendicular to the insertion direction.

3. The elastic body (30) for closure according to claim 1 or 2, **characterized in that** the pressurized insertion receiving portion (31) comprises:
a ring portion ( 312b, 312c, 312d) that is formed along the tapered tubular portion (311) and that is annularly thickened, for contacting by pressing liquid-tightly against the external surface of the shaft (P); and
a fastening margin ( 311bc, 311cd) that is tubular and extends from the ring portion (312b, 312c, 312d) in the insertion direction opposing to the displacement allowance portion (33), and is fastenable to the external surface of the shaft (P).

4. The elastic body (30) for closure according to any one of claims 1 to 3, **characterized by** further comprising a lip portion (34) that is adapted to extend in an outward radial direction of the through-hole (11a) from an end of the external cylinder portion (321) of the fitting portion (32) on the pressurized insertion receiving portion (31) side with respect to the insertion direction, and that is configured to elastically contact the plate-like body (11) .

5. The elastic body (30) for closure according to claim 4, **characterized in that** the lip portion (34) is configured to elastically contact the plate-like body (11)around an entire perimeter of the plate-like body (11) to surround the through-hole (11a) .

6. An air conditioning device (100), comprising:
a housing (10) defining an internal space therein;
a plate-like body (11) partitioning the internal space of the housing (10) into at least two accommodation chambers (S1, S2), and including a through-hole (11a) formed therein that communicates between one accommodation chamber (S1) and another adjacent accommodation chamber (S2);
a refrigeration cycle device (21) including a condenser (212) disposed in the one accommodation chamber (S1), an evaporator (214) disposed in the another adjacent accommodation chamber (S2), and a shaft (P) inserted through the through-hole (11a); and
an elastic body (30) for closure according to any one of claims 1-5, wherein the pressurized insertion receiving portion (31) has formed therein the opening (31a) into which the shaft (P) is pressed and inserted, such that the pressurized insertion receiving portion (31) elastically presses and contacts liquid-tightly against an external surface of the shaft (P), the fitting portion (32) fits liquid-tightly a peripheral edge portion of the through-hole (11a) in the plate-like body (11) in a state elastically pressing against an inner circumferential surface of the through-hole (11a), and the displacement allowance portion (33) closes a gap between the pressurized insertion receiving portion (31) and the fitting portion (32), and allows a relative displacement of the pressurized insertion receiving portion (31) and the fitting portion (32) in a direction parallel to the plate-like body (11) by elastic deformation.

7. The air conditioning device (100) according to claim 6, further comprising a fastening tool (40) to fasten to the shaft (P) the pressurized insertion receiving portion (31) in a state in which the shaft (P) is pressed and inserted.

8. A closure method for closing a gap between a plate-like body (11) in which a through-hole (11a) is formed and a shaft (P) that is inserted in the through-hole (11a), the method **characterized by** comprising the steps of:
pressuring and inserting the shaft (P) into the opening (31a) of an elastic body (30) for closure according to any one of claims 1 to 5, and elastically pressing and contacting the pressurized insertion receiving portion (31) of the elastic body (30) liquid-tightly against an external surface of the shaft (P), wherein
the pressurized insertion receiving portion (31) has formed therein the opening (31a);
the fitting portion (32) fits a peripheral edge portion of the through-hole (11a) in the plate-like body (11); and
the displacement allowance portion (33) closes a gap between the pressurized insertion receiving portion (31) and the fitting portion (32), and allows a relative displacement of the pressurized insertion receiving portion (31) and the fitting portion (32) by elastic deformation; and
pushing the fitting portion (32) into the through-hole (11a), and fitting the fitting portion (32) against the peripheral edge portion of the through-hole (11a) in a state elastically pressing against an inner circumferential surface of the through-hole (11a).

## Patentansprüche

1. Elastischer Verschlusskörper (30) zum Schließen eines Spaltes zwischen einem plattenartigen Körper (11), in welchem ein Durchgangsloch (11a) geformt ist, und einer Welle (P), die in das Durchgangsloch (11a) eingeführt ist, wobei der elastische Körper (30) Folgendes aufweist:
einen unter Druck stehenden Einführungsaufnahmeteil (31), in dem eine Öffnung (31a) geformt ist, in welche die Welle (P) gedrückt und eingeführt werden kann, so dass der unter Druck stehende Eingangsaufnahmeteil (31) elastisch gegen die Außenoberfläche der Welle (P) drückt und mit dieser in flüssigkeitsdichtem Kontakt ist,
einen Passteil (32), der konfiguriert ist, um in flüssigkeitsdichter Weise einen Umfangskantenteil des Durchgangsloches (11a) in dem plattenartigen Körper (11) in einen Zustand zu passen, wobei er elastisch gegen eine Innenumfangsfläche des Durchgangsloches (11a) drückt, und
einen Verschiebungszulassteil (33), der konfiguriert ist, um einen Spalt zwischen dem unter Druck stehenden Einführungsaufnahmeteil (31) und dem Passteil (32) zu schließen und dann eine relative Verschiebung des unter Druck stehenden Einführungsaufnahmeteils (31) und des Passteils (32) in einer Richtung parallel zu dem plattenartigen Körper (11) durch elastische Verformung zu gestatten,
wobei der Passteil (32) einen äußeren Zylinderteil (321) zum Einpassen in das Durchgangsloch (11a) aufweist, wobei der äußere Zylinderteil (321) einen Zylinder mit einer Höhe in einer Einführungsrichtung entlang des Durchgangsloches (11a) der Welle (P) bildet und eine Innenseite hat, durch welche die Welle (P) laufen kann, um den plattenartigen Körper (11) zu durchdringen, wenn sie in die Öffnung (31a) gedrückt und eingeführt wird;
wobei eine Nut (322), deren Querschnitt konkav ist, an einer Position einer Außenumfangsfläche des äußeren Zylinderteils (321) geformt ist, so dass sie zu einer Innenumfangsfläche des Durchgangsloches (11a) weist, so dass die Nut (322) und der Umfangskantenteil des Durchgangsloches (11a) in dem plattenartigen Körper (11) über dem gesamten Umfang des Durchgangsloches (11a) zusammengepasst werden können;
wobei der äußere Zylinderteil (321) der am dicksten geformte Teil entlang der Teile des elastischen Körpers (30) ist und geeignet ist, um in das Durchgangsloch (11a) in einem Zustand einer elastischen Kompression nach innen in einer radialen Richtung des äußeren Zylinderteils (321) eingepasst zu werden, um eine Wasserdichtigkeit zwischen einer Unterseite der Nut (322) und der Innenumfangsfläche des Durchgangsloches (11a) sicherzustellen;
wobei der Verschiebungszulassteil (33) eine Basis (332) und einen gekrümmten Teil (333) aufweist,
**dadurch gekennzeichnet, dass** der Verschiebungszulassteil (33) weiter einen inneren Zylinderteil (331) aufweist, der in der radialen Richtung innerhalb angeordnet ist und einen weiteren Zylinder mit einer weiteren Höhe in der Einführungsrichtung formt;
wobei die Basis (332) in einem Endteil des elastischen Körpers ((30) gemäß der Einführungsrichtung angeordnet ist und den inneren Zylinderteil (331) und den äußeren Zylinderteil (321) verbindet;
wobei der gekrümmte Teil (333) mit einem Ende des inneren Zylinderteils (331) auf der gegenüberliegenden Seite der Basis (332) bezüglich der Einführungsrichtung verbunden ist und eine Form hat, die gekrümmt ist, um sich an die Welle (P) anzunähern;
wobei der unter Druck stehende Einführungsaufnahmeteil (31) einen verjüngten rohrförmigen Teil (311) aufweist, der ein Rohr formt, welches sich in der Einführungsrichtung erstreckt, und ein Ende hat, welches mit dem gekrümmten Teil (333) verbunden ist und eine Form in der Einführungsrichtung hat, die sich kontinuierlich oder in stufenartiger Weise verjüngt, wenn der verjüngte rohrförmige Teil (311) sich von dem gekrümmten Teil (333) entfernt,
wobei die dicke des inneren Zylinderteils (331) sich verringert, wenn der innere Zylinderteil (331) sich von der Basis (332) entfernt,
wobei die Dicke des gekrümmten Teils (333) gleich der Dicke des Verbindungsteils des inneren Zylinderteils (331) mit dem gekrümmten Teil (333) ist, so dass die Dicken des inneren Zylinderteils (331) und des gekrümmten Teils (333) kleiner geformt sind als jene der Basis (332).

2. Elastischer Verschlusskörper (30) nach Anspruch 1,
**dadurch gekennzeichnet, dass** der verjüngte rohrförmige Teil (311) durch Schneiden entlang eines Querschnittes senkrecht zu der Einführungsrichtung verwendet werden kann.

3. Elastischer Verschlusskörper (30) nach Anspruch 1 oder 2, **dadurch gekennzeichnet, dass** der unter Druck stehende einführungsaufnahmeteil (31) Folgendes aufweist:
einen Ringteil (312b, 312c, 312d), der entlang des verjüngten rohrförmigen Teils (311) geformt ist, um einen Kontakt herzustellen durch Pressen in flüssigkeitsdichter Weise gegen die Außenfläche der Welle (P); und
einen Befestigungsrand (311bc, 311cd), der rohrförmig ist und sich von dem ringförmigen Teil (312b, 312c, 312d) in der Einführungsrichtung entgegengesetzt zum Verschiebungszulassteil (33) erstreckt, und an der Außenfläche der Welle (P) befestigbar ist.

4. Elastischer Verschlusskörper (30) nach einem der Ansprüche 1 bis 3, **dadurch gekennzeichnet, dass** er weiter einen Lippenteil (34) aufweist, der so ausgebildet ist, dass er sich in einer radialen Auswärtsrichtung des Durchgangsloches (11a) von einem Ende des äußeren Zylinderteils (321) des Passteils (32) auf der Seite des unter Druck stehenden Einführungsaufnahmeteils (31) bezüglich der Einführungsrichtung erstreckt, und der so konfiguriert ist, dass er elastisch in Kontakt mit dem plattenartigen Körper (11) ist.

5. Elastischer Verschlusskörper (30) nach Anspruch 4, **dadurch gekennzeichnet, dass** der Lippenteil (34) so konfiguriert ist, dass er elastisch in Kontakt mit dem plattenartigen Körper (11) ist, und zwar um einen gesamten Umfang des plattenartigen Körpers (11), um das Durchgangsloch (11a) zu umgeben bzw. zu umrunden.

6. Klimatisierungsvorrichtung (100), die Folgendes aufweist:
ein Gehäuse (10), welches einen Innenraum darin definiert;
einen plattenartigen Körper (11), der den Innenraum des Gehäuses (10) in mindestens zwei Aufnahmekammern (S1, S2) unterteilt und ein Durchgangsloch (11a) aufweist, welches darin geformt ist, welches eine Verbindung zwischen einer Aufnahmekammer (S1) und einer anderen benachbarten Aufnahmekammer (S2) herstellt;
eine Kühlkreislaufvorrichtung (21), die einen Kondensator (212) aufweist, der in der einen Aufnahmekammer (S1) angeordnet ist, einen Verdampfer (214), der in der anderen benachbarten Aufnahmekammer (S2) angeordnet ist und eine Welle (P), die durch das Durchgangsloch (11a) eingeführt ist, und
einen elastischen Verschlusskörper (30) nach einem der Ansprüche 1 bis 5, wobei in dem unter Druck stehenden Einführungsaufnahmeteil (31) die Öffnung a) geformt ist, in welche die Welle (P) gedrückt und eingeführt ist, so dass der unter Druck stehende einführungsaufnahmeteil (31) elastisch gegen eine Außenfläche der Welle (P) drückt und in flüssigkeitsdichtem Kontakt damit ist, wobei der Passteil (32) flüssigkeitsdicht zu einem Umfangskantenteil des Durchgangsloches (11a) in dem plattenartigen Körper (11) in einem Zustand passt, in welchem er elastisch gegen eine Innenumfangsfläche des Durchgangsloches (11a) drückt, und wobei der Verschiebungszulassteil (33) einen Spalt zwischen dem unter Druck stehenden Einführungsaufnahmeteil (31) und dem Passteil (32) schließt und eine relative Verschiebung des unter Druck stehenden Einführungsaufnahmeteils (31) und des Passteils (32) in einer Richtung parallel zu dem plattenartigen Körper (11) durch elastische Verformung gestattet.

7. Klimatisierungsvorrichtung (100 nach Anspruch 6, die weiter ein Befestigungswerkzeug (40) aufweist, um die Welle (P) an dem unter Druck stehenden Einführungsaufnahmeteil (31) in einem Zustand zu befestigen, in dem die Welle (P) gedrückt und eingeführt ist.

8. Verschlussverfahren zum Schließen eines Spaltes zwischen einem plattenartigen Körper (11), in dem ein Durchgangsloch (11a) geformt ist, und einer Rille (P), die in das Durchgangsloch (11a) eingeführt ist, wobei das Verfahren **dadurch gekennzeichnet ist, dass** es folgende Schritte aufweist:
Drücken und Einführen der Welle (P) in die Öffnung a) eines elastischen Verschlusskörpers (30) nach einem der Ansprüche 1 bis 5, und elastisches Pressen und in-Kontakt-Bringen des unter Druck stehenden Einführungsaufnahmeteils (31) des elastischen Körpers (30) in flüssigkeitsdichter Weise gegen eine Außenfläche der Welle (P), wobei in dem unter Druck stehenden Einführungsaufnahmeteil (31) die Öffnung a) geformt ist,
der Passteil (32) zu einem Umfangskantenteil des Durchgangsloches (11a) in den plattenartigen Körper (11) passt, und
der Verschiebungszulassteil (33) einen Spalt zwischen dem unter Druck stehenden Einführungsaufnahmeteil (31) und dem Passteil (32) schließt und eine relative Verschiebung des unter Druck stehenden Einführungsaufnahmeteils (31) und des Passteil (32) durch elastische Verformung gestattet; und
Drücken des Passteils (32) in das Durchgangsloch (11a) und Passen des Passteils (32) gegen den Umfangskantenteil des Durchgangsloches (11a) in einem Zustand des elastischen Pressens gegen eine Innenumfangsfläche des Durchgangsloches (11a).

## Revendications

1. Corps élastique (30) pour fermeture afin de fermer un interstice entre un corps en forme de plaque (11) dans lequel un trou débouchant (11a) est formé et un arbre (P) qui est inséré dans le trou débouchant (11a), le corps élastique (30) comprenant :
une partie de réception d'insertion sous pression (31) ayant, formée à l'intérieur de cette dernière, une ouverture (31a) dans laquelle l'arbre (P) peut être comprimé et inséré, de sorte que la partie de réception d'insertion sous pression (31) comprime élastiquement et est en contact de manière étanche au liquide contre une surface externe de l'arbre (P) ;
une partie de montage (32) configurée pour monter, de manière étanche au liquide, une partie de bord périphérique du trou débouchant (11a) dans le corps en forme de plaque (11) dans un état appuyant élastiquement contre une surface circonférentielle interne du trou débouchant (11a) ; et
une partie de tolérance de déplacement (33) configurée pour fermer un interstice entre la partie de réception d'insertion sous pression (31) et la partie de montage (32) et ensuite pour permettre un déplacement relatif de la partie de réception d'insertion sous pression (31) et de la partie de montage (32) dans une direction parallèle au corps en forme de plaque (11) par déformation élastique,
dans lequel la partie de montage (32) comprend une partie de cylindre externe (321) pour montage dans le trou débouchant (11a), ladite partie de cylindre externe (321) formant un cylindre avec une hauteur dans une direction d'insertion le long du trou débouchant (11a) de l'arbre (P) et ayant un intérieur à travers lequel l'arbre (P) peut passer pour pénétrer dans le corps en forme de plaque (11) lorsqu'il est comprimé et inséré dans ladite ouverture (31a) ;
dans lequel une rainure (322) dont la section transversale est concave est formée dans une position d'une surface périphérique externe de la partie de cylindre externe (321) pour faire face à une surface circonférentielle interne du trou débouchant (11a), de sorte que la rainure (322) et la partie de bord périphérique du trou débouchant (11a) dans le corps en forme de plaque (11) peuvent être montées ensemble sur toute la périphérie du trou débouchant (11a) ;
dans lequel la partie de cylindre externe (321) est la partie formée de la manière la plus épaisse pari les parties du corps élastique (30) et est appropriée pour être montée dans le trou débouchant (11a) dans un état de compression élastique vers l'intérieur dans une direction radiale de la partie de cylindre externe (321) afin d'assurer l'étanchéité à l'eau entre une surface inférieure de la rainure (322) et la surface circonférentielle interne du trou débouchant (11a) ;
dans lequel la partie de tolérance de déplacement (33) comprend une base (332) et une partie courbe (333) ;
**caractérisé en ce que** la partie de tolérance de déplacement (33) comprend en outre une partie de cylindre interne (331) qui est disposée vers l'intérieur dans la direction radiale et forme un autre cylindre ayant une autre hauteur dans la direction d'insertion ;
dans lequel la base (332) est disposée dans une partie d'extrémité du corps élastique (30) selon la direction d'insertion, et raccorde la partie de cylindre interne (331) et la partie de cylindre externe (321) ;
dans lequel la partie courbe (333) est raccordée à une extrémité de la partie de cylindre interne (331) sur le côté opposé de la base (332) par rapport à la direction d'insertion et a une forme qui est courbée pour s'approcher de l'arbre (P) ;
dans lequel la partie de réception d'insertion sous pression (31) comprend une partie tubulaire progressivement rétrécie (311) formant un tube s'étendant dans la direction d'insertion, ayant une extrémité raccordée à la partie courbée (333), et a une forme dans la direction d'insertion qui est progressivement rétrécie de manière continue ou par palier au fur et à mesure que la partie tubulaire progressivement rétrécie (311) s'éloigne de la partie courbe (333) ;
l'épaisseur de la partie de cylindre interne (331) se réduit au fur et à mesure que la partie de cylindre interne (331) s'éloigne de la base (332),
l'épaisseur de la partie courbe (333) est égale à l'épaisseur de la partie de raccordement de la partie de cylindre interne (331) avec la partie courbée (333), de sorte que les épaisseurs de la partie de cylindre interne (331) et de la partie courbe (333) sont plus petites que celle de la base (332).

2. Corps élastique (30) pour fermeture selon la revendication 1, **caractérisé en ce que** la partie tubulaire progressivement rétrécie (311) peut être utilisée en coupant le long d'une section transversale perpendiculaire à la direction d'insertion.

3. Corps élastique (30) pour fermeture selon la revendication 1 ou 2, **caractérisé en ce que** la partie de réception d'insertion sous pression (31) comprend :
une partie annulaire (312b, 312c, 312d) qui est formée le long de la partie tubulaire progressivement rétrécie (311), et qui est épaissie de manière annulaire, pour être en contact par compression de liquide de manière étanche contre la surface externe de l'arbre (P) ; et
une marge de fixation (311bc, 311cd) qui est tubulaire et s'étend à partir de la partie annulaire (312b, 312c, 312d) dans la direction d'insertion opposée à la partie de tolérance de déplacement (33), et peut être fixée à la surface externe de l'arbre (P).

4. Corps élastique (30) pour fermeture selon l'une quelconque des revendications 1 à 3, **caractérisé en ce qu'**il comprend en outre une partie de lèvre (34) qui est adaptée pour s'étendre dans une direction radiale vers l'extérieur du trou débouchant (11a) à partir d'une extrémité de la partie de cylindre externe (321) de la partie de montage (32) du côté de la partie de réception d'insertion sous pression (31) par rapport à la direction d'insertion, et qui est configurée pour être en contact élastiquement avec le corps en forme de plaque (11).

5. Corps élastique (30) pour fermeture selon la revendication 4, **caractérisé en ce que** la partie de lèvre (34) est configurée pour mettre en contact élastiquement le corps en forme de plaque (11) autour de tout un périmètre du corps en forme de plaque (11) afin d'entourer le trou débouchant (11a).

6. Dispositif de climatisation (100) comprenant :
un boîtier (10) définissant un espace interne dans ce dernier ;
un corps en forme de plaque (11) séparant l'espace interne du boîtier (10) en au moins deux chambres de logement (S1, S2) et comprenant un trou débouchant (11a) formé à l'intérieur de ce dernier qui communique entre une chambre de logement (S1) et une autre chambre de logement (S2) adjacente ;
un dispositif de cycle de réfrigération (21) comprend un condenseur (212) disposé dans la une chambre de logement (S1), un évaporateur (214) disposé dans l'autre chambre de logement (S2) adjacente, et un arbre (P) inséré dans le trou débouchant (11a) ; et
un corps élastique (30) pour fermeture selon l'une quelconque des revendications 1 à 5, dans lequel la partie de réception d'insertion sous pression (31) a, formée dans cette dernière, l'ouverture (31a) dans laquelle l'arbre (P) est comprimé et inséré, de sorte que la partie de réception d'insertion sous pression (31) comprime élastiquement et est en contact de manière étanche au liquide contre une surface externe de l'arbre (P), la partie de montage (32) permet de monter une partie de bord périphérique, de manière étanche au liquide, du trou débouchant (11a) dans le corps en forme de plaque (11) dans un état appuyant élastiquement contre une surface circonférentielle interne du trou débouchant (11a), et la partie de tolérance de déplacement (33) ferme un interstice entre la partie de réception d'insertion sous pression (31) et la partie de montage (32) et permet un déplacement relatif de la partie de réception d'insertion sous pression (31) et de la partie de montage (32) dans une direction parallèle au corps en forme de plaque (11) par déformation élastique.

7. Dispositif de climatisation (100) selon la revendication 6, comprenant en outre un outil de fixation (40) pour fixer à l'arbre (P), la partie de réception d'insertion sous pression (31) dans un état dans lequel l'arbre (P) est comprimé et inséré.

8. Procédé de fermeture pour fermer un interstice entre un corps en forme de plaque (11) dans lequel un trou débouchant (11a) est formé et un arbre (P) qui est inséré dans le trou débouchant (11a), le procédé étant **caractérisé en ce qu'**il comprend les étapes suivantes :
mettre sous pression et insérer l'arbre (P) dans l'ouverture (31a) du corps élastique (30) pour fermeture selon l'une quelconque des revendications 1 à 5 et comprimer élastiquement et mettre en contact la partie de réception d'insertion sous pression (31) du corps élastique (30), de manière étanche au liquide, contre une surface externe de l'arbre (P), dans lequel :
la partie de réception d'insertion sous pression (31) a, formée à l'intérieur de cette dernière, l'ouverture (31a) ;
la partie de montage (32) permet de monter une partie de bord périphérique du trou débouchant (11a) dans le corps en forme de plaque (11) ; et
la partie de tolérance de déplacement (33) ferme un interstice entre la partie de réception d'insertion sous pression (31) et la partie de montage (32), et permet un déplacement relatif de la partie de réception d'insertion sous pression (31) et de la partie de montage (32) par déformation élastique ; et
pousser la partie de montage (32) dans le trou débouchant (11a), et monter la partie de montage (32) contre la partie de bord périphérique du trou débouchant (11a) dans un état de pression élastique contre une surface circonférentielle interne du trou débouchant (11a) .
